# EUROPEAN PATENT APPLICATION

(11) **EP 4 664 369 A1**
(43) Date of publication of application: **17.12.2025**
(21) Application number: 25174726.7
(22) Date of filing: 07.05.2025
(51) Int. Cl.: G06N 20/00, G06N 3/09

(54) **MACHINE LEARNING MODEL BUILDING DEVICE, MACHINE LEARNING MODEL BUILDING METHOD, AND PROGRAM**

(30) Priority: 04.06.2024 JP 2024090699
(71) Applicant: Hitachi, Ltd., Tokyo 100-8280 (JP)
(72) Inventor: ITO, Sasuga, Tokyo, 100-8280 (JP); SHINTANI, Hiroshi, Tokyo, 100-8280 (JP); KAWASAKI, Takeshi, Tokyo, 100-8280 (JP); FURUTANI, Ryo, Tokyo, 100-8280 (JP); MAKINO, Kazuhiro, Tokyo, 100-8280 (JP)
(74) Representative: MERH-IP Matias Erny Reichl Hoffmann Patentanwälte PartG mbB

(57) **Abstract**

A machine learning model building device comprises an actual operation database that holds actual operation data. The machine learning model building device creates a teaching data set including one or more pieces of teaching data based on the actual operation data obtained from the actual operation database. The machine learning model building device creates a post-division teaching data set containing a plurality of pieces of teaching data after dividing the teaching data contained in the teaching data set by dividing the teaching data so that an error between a characteristic quantity of the teaching data before division and the sum of characteristic quantities of the plurality of pieces of teaching data after division becomes less than a tolerance value; and creates the machine learning model using the post-division teaching data set.

## Description

### Technical Field

The present invention relates to a machine learning model building device, a machine learning model building method, and a program.

### Background Art

In order to minimize the number of rework during mass production of a rail vehicle, it is necessary to predict the damage and ride quality caused by load during running in actual operation before the mass production of the rail vehicle. For this purpose, it is effective to create a machine learning model using machine learning by utilizing the actual measurement test data when a preceding prototype rail vehicle is running, and to predict the load and damage, etc. from operation information and route information using the machine learning model.

Patent document 1 discloses a method for generating teaching data capable of improving the generalization performance of a learning model (hereinafter referred to as the "conventional art"). The conventional art is a method for generating data for domain generalization in machine learning. The conventional art includes a process in which a computer performs augmentation using the learning data used to train a machine learning model as the source data, and a process in which a computer extracts a dataset containing both the original data and the data generated by data augmentation as a dataset for domain generalization.

### Citation list

### Patent Literature

Patent Document 1: Japanese Patent Application Laid-Open No. JP-2022-124989

### Summary of the Invention

### Technical Problem

Since running tests of the rail vehicle are conducted on routes, it is required to efficiently build a machine learning model with high generalization performance from limited test data. Not only for running tests of the rail vehicle, but also for building the machine learning model, it is required to efficiently build the machine learning model with high generalization performance from limited test data.

To build a machine learning model with high generalization performance, it is effective to increase the number of data for training by data partitioning. When applying machine learning models to the evaluation of characteristic quantity of a mechanical system such as a rail vehicle, in order to obtain physically meaningful results, it is necessary not only to increase the number of data by data partitioning but also to ensure that the sum of characteristic quantities obtained from the data for training after partitioning is no different from that before partitioning. The conventional art has a mechanism to increase the number of data, but it divides one original data into "a target part that should be unchanged because it directly affects the task to be learned by machine learning" and "other non-target parts," and augments the non-target parts by adding noise and so on. The conventional art cannot guarantee that the sum of the quantities is preserved.

The present invention has been made to solve the above problem. That is, one of the purposes of the present invention is to provide a machine learning model building device, a machine learning model building method, and a program that can efficiently build a machine learning model with high generalization performance from limited test data by "making sure that the sum of characteristic quantities obtained from each teaching data contained in the divided teaching data set is no different (strictly within a tolerance value range) from the characteristic quantity that should be retained as the original one whole data".

### Solution to Problem

In order to solve the above problem, the present disclosure machine learning model building device comprises an information processing device that builds a machine learning model for predicting a characteristic of actual operation data of equipment. In the present disclosure machine learning model building device, the information processing device comprises an actual operation database that holds the actual operation data; and the information processing device is configured to: obtain the actual operation data from the actual operation database; create a teaching data set including one or more pieces of teaching data based on the actual operation data; create a post-division teaching data set containing a plurality of pieces of post-division teaching data by dividing the teaching data contained in the teaching data set so that an error between a characteristic quantity of the teaching data before division and the sum of characteristic quantities of the plurality of pieces of teaching data after division becomes less than or equal to a tolerance value; and/or create the machine learning model using the post-division teaching data set.

The present disclosure machine learning model building method is executed by an information processing device, the information processing device building a machine learning model for predicting a characteristic of actual operation data of equipment, the information processing device comprising an actual operation database that holds the actual operation data. The machine learning model building method includes: obtaining the actual operation data from the actual operation database; creating a teaching data set including one or more pieces of teaching data based on the actual operation data; creating a post-division teaching data set containing a plurality of pieces of post-division teaching data by dividing the teaching data contained in the teaching data set so that an error between a characteristic quantity of the teaching data before division and the sum of characteristic quantities of the plurality of pieces of teaching data after division becomes less than or equal to a tolerance value; and/or creating the machine learning model using the post-division teaching data set.

The present disclosure a program for causing a computer to execute a process for building a machine learning model for predicting a characteristic of actual operation data of equipment. In the present disclosure non-transitory computer-readable storage medium, the process includes: obtaining the actual operation data from the actual operation database; creating a teaching data set including one or more pieces of teaching data based on the actual operation data; creating a post-division teaching data set containing a plurality of pieces of post-division teaching data by dividing the teaching data contained in the teaching data set so that an error between a characteristic quantity of the teaching data before division and the sum of characteristic quantities of the plurality of pieces of teaching data after division becomes less than or equal to a tolerance value; and/or creating the machine learning model using the post-division teaching data set.
It is noted that the attached set of claims includes references mainly to claim 1 in the dependent claims. This shall not limit the disclosure at all and the features of each dependent claim can be combined with the features of at least one of the previous claims as long as no technical contradiction is present.

### Advantageous Effect

According to the present invention, machine learning models with high generalization performance can be efficiently constructed from limited test data. The effects described herein are not necessarily limited to any of the effects described in this disclosure.

### Brief Description of Drawings

Fig. 1 shows an example configuration and operation of a machine learning model building device according to the first embodiment of the present invention.
Fig.2 illustrates operational information.
Fig.3 illustrates load measurement data.
Fig. 4A is an illustration of how distance-load data is divided into data for each predetermined distance window L1.
Fig. 4B illustrates how distance-speed data is divided into data for each predetermined distance window L1.
Fig. 5 illustrates an error function expressed in Equation (1).
Fig. 6 illustrates characteristic quantity.
Fig. 7 illustrates a similar data reduction unit.
Fig.8 shows an example of a hardware configuration of a computer applied to the machine learning model building device.
Fig.9A illustrates an example configuration and operation of the machine learning model building device according to the second embodiment.
Fig. 9B is a flowchart to explain the operation of machine learning model building according to the second embodiment.
Fig. 10 illustrates an example configuration and operation of the machine learning model building device according to the third embodiment of the present invention.
Fig. 11 illustrates the environmental database unit.
Fig.12 illustrates data partitioning.

### Description of Embodiments

Each embodiment of the present invention will be described below with reference to the drawings. In all figures of the embodiments, identical or corresponding parts may be marked with the same symbol.

In the following explanations, various types of information may be described in terms of "graphs" and the like, but the information may be expressed in data structures other than these.

In the following description, the functional block may be used as the subject of the process, but the subject of the process may be the CPU or device instead of the functional block. The subject of the processing performed by executing the program may be any arithmetic unit, and may include dedicated circuits that perform specific processing. Here, dedicated circuits are, for example, FPGA (Field Programmable Gate Array), ASIC (Application Specific Integrated Circuit), CPLD (Complex Programmable Logic Device), etc.

In the following description, a program may be installed on a computer from a program source. The program source may be, for example, a program distribution server or a storage medium readable by the computer. If the program source is a program distribution server, the program distribution server may include a processor and a storage resource that stores the program to be distributed, and the processor of the program distribution server may distribute the program to other computers. In each embodiment, two or more programs may be realized as one program, or one program may be realized as two or more programs.

### <<First embodiment>>

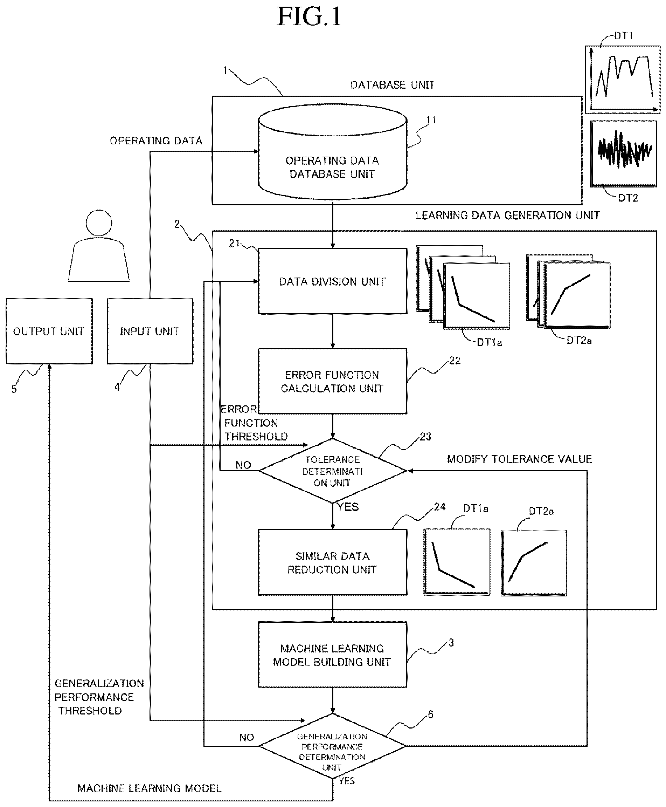

A machine learning model building device according to the first embodiment of the present invention will be described. Fig. 1 shows an example configuration and operation of the machine learning model building device according to the first embodiment of the present invention. As shown in FIG. 1, the machine learning model building device according to the first embodiment includes a database unit 1, a learning data generation unit 2, a machine learning model building unit 3, an input unit 4, and an output unit 5.

The database unit 1 includes an operating data database unit 11. The operating data database unit 11 stores operation information and load measurement data, which are actual operating data of equipment (in this example, a rail vehicle).

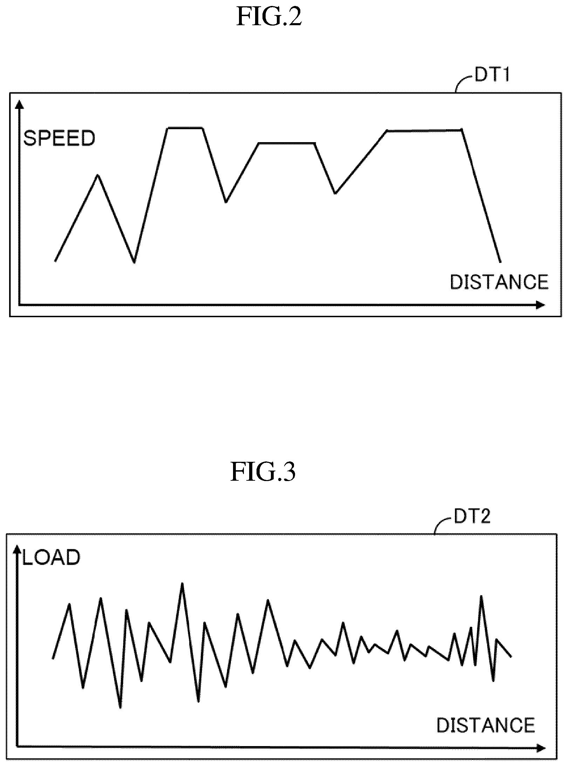

Fig.2 illustrates the operational information. As shown in Fig. 2, an example of operation information is the data DT1 (hereinafter referred to as the "distance-speed data DT1"), which measures the speed of the rail vehicle relative to the distance traveled when it travels a certain travel section. Fig.3 illustrates the load measurement data. As shown in Fig. 3, the load measurement data is the data DT2 (hereinafter referred to as "distance-load data DT2"), which is the data of the load relative to the distance traveled when the rail vehicle traveled a certain travel section.

The set of distance-speed data DT1 and the distance-load data DT2 collected when the rail vehicle travels one travel section is used as teaching data. One or more pieces of teaching data are referred to as a " teaching data set". The teaching data set is used by the machine learning model building unit 3 to generate a machine learning model.

The learning data generation unit 2 includes a data division unit 21, an error function calculation unit 22, a tolerance value determination unit 23, and a similar data reduction unit 24.

The data division unit 21 acquires distance-speed data DT1 and distance-load data DT2 for the same travel section from the operating data database unit 11, creates one set of teaching data by pairing them, and acquires the teaching data set including the created teaching data. It should be noted that the data division unit 21 may acquire multiple distance-speed data DT1 and distance-load data DT2 for the same travel section from the operating data database unit 11, and create multiple teaching data sets by pairing each of them. The data division unit 21 divides each teaching data contained in the teaching data set.

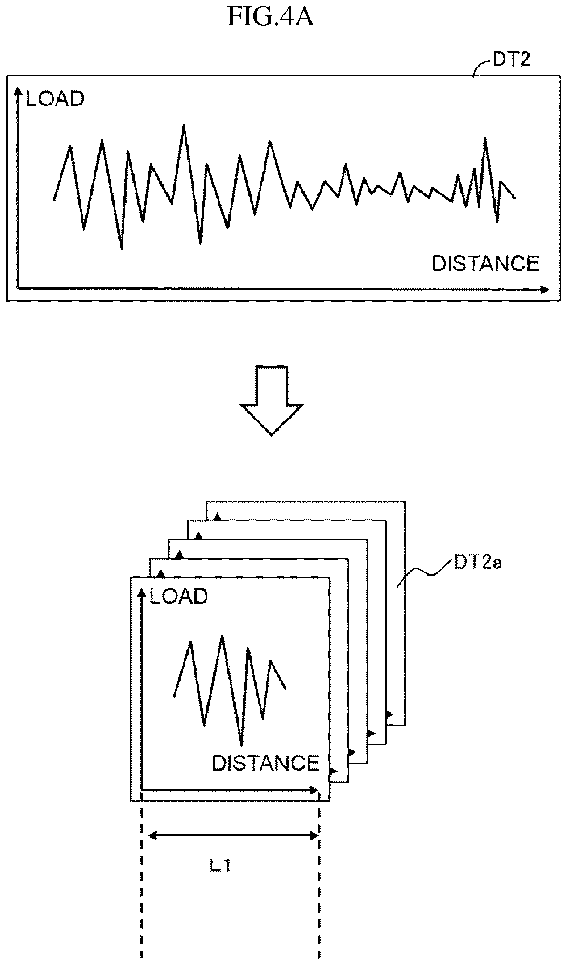

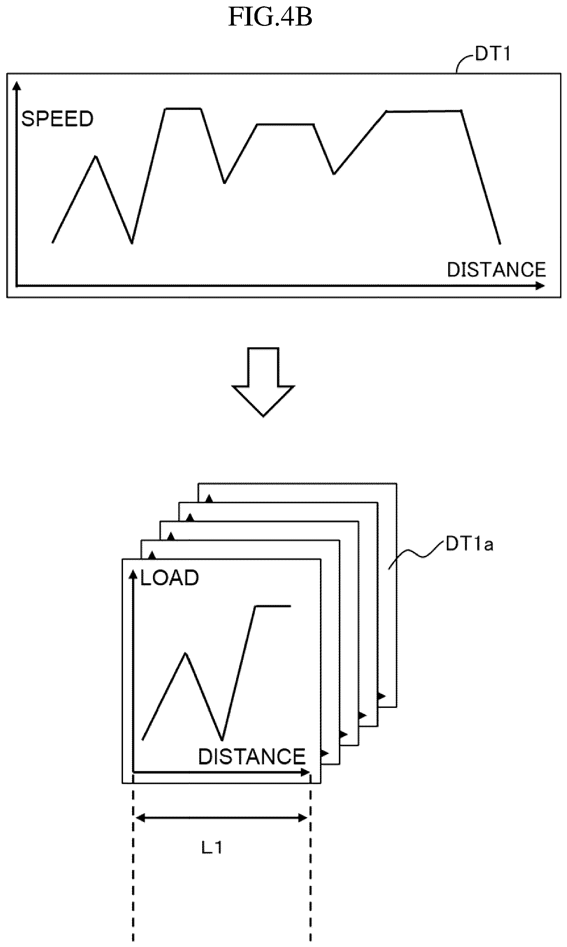

The data division unit 21 divides the distance-load data DT2 into data DT2a for each predetermined distance window L1, as shown in Fig. 4A, and also divides the distance-speed data DT1 into data DT1a for each predetermined distance window L1, as shown in Fig. 4B, thereby dividing the teaching data. In Fig. 4A and Fig. 4B, an example of dividing one teaching data is explained. The data division unit 21 performs such division of the teaching data for one teaching data when the teaching data set contains one teaching data, or for each of multiple teaching data when the teaching data set contains multiple teaching data.

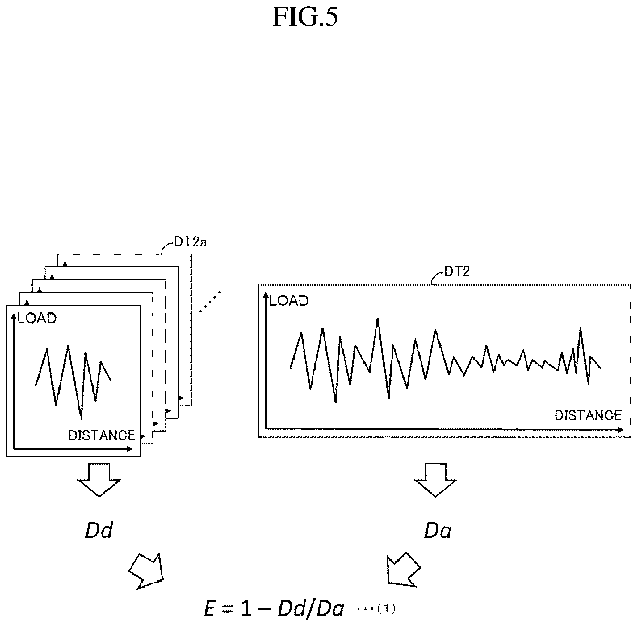

The error function calculation unit 22 calculates a value (E) of the error function using the error function expressed in Equation (1) in Fig. 5 for evaluating the teaching data set including the post-division teaching data, as shown in Fig. 5. The error function expressed in Equation (1) is a function that represents the error in a characteristic quantity between the pre-division teaching data (pre-division teaching data set) and the post-division teaching data (post-division teaching data set). Among the teaching data, the teaching data having a high relationship with the characteristics of the equipment (in this example, the rail vehicle) for which the machine learning model is to be created is used as the teaching data used to evaluate the error of the characteristic quantity. The teaching data having a high relationship with the characteristics of the equipment to be created the machine learning model is, for example, data (in this example, distance-load data DT2) that is highly related to the data (in this example, the load frequency distribution) output by the machine learning model to be created.

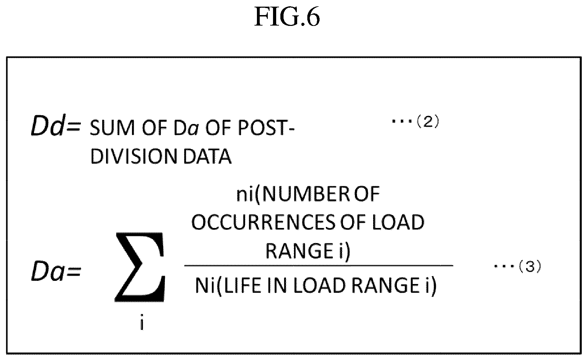

As shown in Fig. 6, an example of a characteristic quantity Dd is expressed by Equation (2). An example of the characteristic quantity Da is expressed by Equation (3). The characteristic quantity Da expressed in Equation (3) may be referred to as the "degree of damage," which indicates the degree of damage to the rail vehicle. In this example, the characteristic quantity Da is the degree of damage, but the characteristic quantity Da is not limited to the degree of damage and may be any other characteristic quantity (a physical quantity that can be derived (evaluated) from the data output by the machine learning model to be created).

The error function calculation unit 22 calculates an error by substituting the characteristic quantity Da and the characteristic quantity Dd into the error function represented by Equation (1), the error to be calculated being an error (an error value) between "Characteristic quantity Da of distance-Load Data DT2a of the pre-division teaching data" and "Sum of characteristic quantity Da of distance-Load Data DT2a of the plurality of pieces of post-division teaching data". A larger value of the error function indicates a larger error between the characteristic quantity (characteristic quantity Da) of the pre-division teaching data (teaching data set) and the characteristic quantity (characteristic quantity Dd) of the post-division teaching data (teaching data set). If there is more than one set of pre-division teaching data, the error expressed in Equation (1) is calculated by the same number as the number of teaching data.

In Equation (3), the number of occurrences of the load range i (i = a1,a2,a3,... an (Note that each of a1 to an indicates a different range) can be obtained from the calculated load frequency distribution (not shown) indicating the frequency (number of occurrences) for each load range i that is calculated from the distance-load data DT2 by the rainflow method or the like. The life in the load range i can be determined in advance by elemental testing of the components.

The tolerance value determination unit 23 obtains a value of the error function from the error function calculation unit 22 and determines whether a value of the error function is smaller than the error function threshold (a tolerance value). When there is more than one set of pre-division teaching data, the tolerance value determination unit 23 determines whether all of the error function values corresponding to each set of teaching data are smaller than the error function threshold (tolerance value). When the value of the error function is greater than or equal to the error function threshold (tolerance value), the generalization performance of the machine learning model created using the post-division teaching data set may be adversely affected because the error in the characteristic quantity of the post-division teaching data set relative to the pre-division teaching data set is large.

Therefore, in this case, the tolerance value determination unit 23 outputs the pre-division teaching data set to the data division unit 21. In order to reduce the value of the error function, the data division unit 21 divides the teaching data contained in the pre-division teaching data set again by a distance window Lnew of a different size (larger or smaller than the previous distance window) from the previous distance window (L1 for the first time). That is, the data division unit 21 divides the teaching data by a number of data divisions different from the previous data division number. Depending on the size of the distance window, the error in the characteristic quantity between the pre-division teaching data set and the post-set teaching data is different.

The data division unit 21 outputs the teaching data set including multiple post-division teaching data to the error function calculation unit 22. The error function calculation unit 22 calculates the value of the error function for the teaching data set containing the post-division teaching data divided by a new distance window Lnew. The tolerance value determination unit 23 determines again whether the value of the error function of the teaching data set is smaller than the error function threshold (tolerance value).

When the value of the error function is smaller than the error function threshold (tolerance value), the error in characteristic quantity between the pre-division teaching data set and the post-division teaching data set is within the tolerance range. Therefore, in this case, the tolerance value determination unit 23 outputs the post-division teaching data set to the similar data reduction unit 24.

When the similar data reduction unit 24 obtains the post-division teaching data set, the similar data reduction unit 24 reduces some of the teaching data from a plurality of pieces of teaching data in the teaching data set so that there is less teaching data that is similar to each other from the post-teaching data set after the partition. In this way, the similar data reduction unit 24 adjusts the number of teaching data included in the teaching data set so that the teaching data set does not contain a large number of only certain teaching data and has data diversity, and the teaching data set after similar data reduction is used to create a machine learning model, thereby making it easier to obtain a machine learning model with high generalization performance.

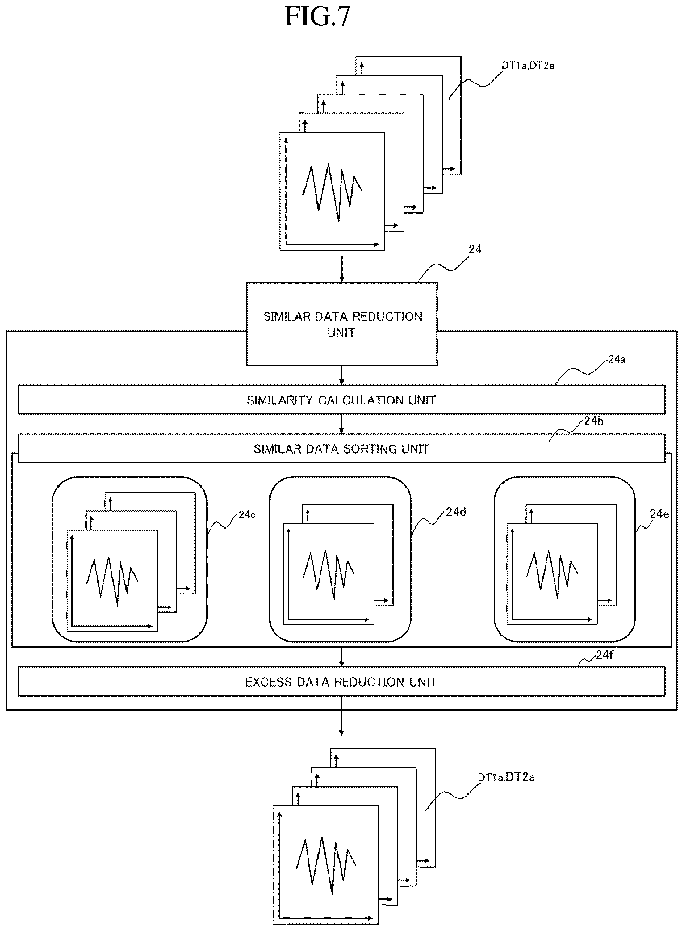

Fig. 7 illustrates the similar data reduction unit 24. The similar data reduction unit 24 includes a similarity calculation unit 24a, a similarity data sorting unit 24b, and an excess data reduction unit 24f. When the similar data reduction unit 24 obtains the post-division teaching data set, it inputs the post-division teaching data set to the similarity calculation unit 24a. The similarity calculation unit 24a calculates the similarity for the distance-load data DT2a among the plurality of pieces of teaching data included in the post-division teaching data set, and associates the similarity with the plurality of pieces of teaching data (distance-load data DT2a and distance-speed data DT1a) to output them to the similarity data sorting unit 24b. The similarity calculation may be performed on the distance- speed data DT1a among the plurality of pieces of teaching data.

Based on the similarity, the similarity data sorting unit 24b divides a number of teaching data contained in the teaching data set into a plurality of similar teaching data groups 24c, 24d, and 24e, and outputs them to the excess data reduction unit 24f. It should be noted that each of the similar teaching data groups 24c, 24d and 24e includes a plurality of pieces of teaching data (e.g., a plurality of pieces of teaching data whose similarity is within a predetermined threshold) that are similar to each other.

The excess data reduction unit 24f reduces the teaching data contained in each of the similar teaching data groups 24c, 24d, and 24e from the teaching data set so that the number of teaching data contained in each of the similar teaching data groups 24c, 24d, and 24e is averaged (e.g., the same number or within a standard number range), thereafter outputting the reduced teaching data set to the machine learning model building unit 3.

Once the machine learning model building unit 3 obtains the teaching data set, it creates a machine learning model using the teaching data set, for example, by machine learning (e.g., deep learning techniques, which is one method of machine learning). An example of a machine learning model is a machine learning model using a neural network that takes distance-speed data as input and outputs a load frequency distribution necessary for evaluating the degree of damage to rail vehicles.

By using a teaching data set with a small error in the characteristic quantity of between the pre-division teaching data set and the post-division teaching data set, and by using a teaching data set with diversity of data, it is more likely that a machine learning model with high generalization performance can be created. The machine learning model building unit 3 outputs the created machine learning model to the generalization performance determination unit 6.

The generalization performance determination unit 6 evaluates (judges/determines) the generalization performance of the created machine learning model. For example, the generalization performance determination unit 6 calculates the generalization performance (evaluation index) of the machine learning model using, for example, a test data set prepared in advance, and determines/judges whether the generalization performance (evaluation index) of the machine learning model satisfies a predetermined standard (standard performance) (compares, for example, the generalization performance and the generalization performance threshold, and determines based on the comparison result.) For example, MAE (mean absolute error), MAPE (mean absolute percent error), WAPE (weighted absolute percent error), MSE (mean square error), RMSE (square root of mean square error), etc. can be used as the evaluation index for generalization performance.

When it is determined that the generalization performance of the machine learning model meets the specified criteria, the generalization performance determination unit 6 outputs the machine learning model to the output unit 5. When it is determined that the generalization performance of the machine learning model does not meet the specified criteria, the generalization performance determination unit 6 modifies, so that the generalization performance improves, the error function threshold (tolerance value) to an error function threshold (tolerance value) different from the error function threshold (tolerance value) set last time (for example, an error function threshold value (tolerance value) that makes the error judgment stricter). The generalization performance determination unit 6 sets the modified error function threshold (tolerance value) as the new error function threshold, obtains the pre-division teaching data set, inputs it the data division unit 21, and regenerates the machine learning model.

The input unit 4 is an interface for the user to input data into the machine learning model building device.

The output unit 5 is an interface for presenting the data processed by the machine learning model building device (e.g., the machine learning model created) to the user.

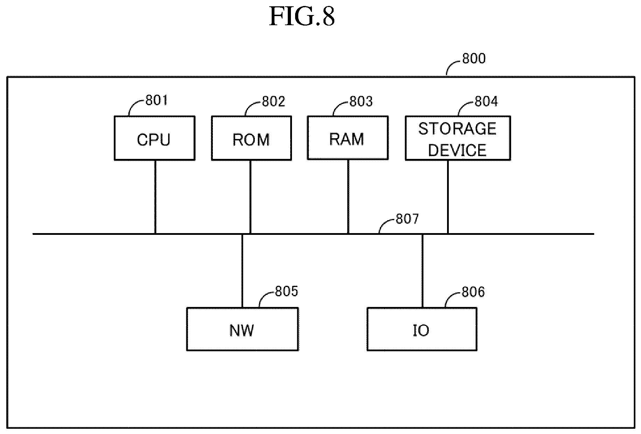

Fig. 8 shows an example hardware configuration of a computer 800 applied to a machine learning model building device. The computer 800 may be referred to as a "computer" or "information processor". The computer 800 includes a CPU 801, ROM 802, RAM 803, a non-volatile storage device 804 capable of reading and writing data, a network interface 805, and an I/O interface 806. These are communicably connected to each other via bus 807.

The CPU 801 is a computing device that loads various programs stored in ROM 802 and/or the storage device 804 (not shown) into RAM 803 and executes the programs loaded into RAM 803 to realize various functions.

The RAM 803 is loaded with various programs to be executed by the CPU 801 as described above, and temporarily stores data used by the CPU 801 in executing various programs. The ROM 802 and/or the storage device 804 are non-volatile storage media, and the ROM 802 and/or the storage device 804. The various programs are stored in the ROM 802 and/or the storage device 804.

The network interface 805 is an interface for the computer 800 to be connected to a network. The I/O interface 806 is an interface for the computer 800 to be connected to an operating device and a display (display device) capable of showing images, etc.

The database unit (operating data database unit 11) in Fig. 1 corresponds to the database stored in the storage device 804. The learning data generation unit 2 (the data division unit 21, the error function calculation unit 22, the tolerance value determination unit 23, and the similar data reduction unit 24), the machine learning model building unit 3, and the generalization performance determination unit 6 are composed of programs stored in ROM 802 and/or memory devices. The input unit 4 and the output unit 5 correspond to input/output interfaces.

It should be noted that instead of the computer 800, a hardware device in which part or all of the computer 800 is composed of an FPGA (Field Programmable Gate Array) or the like may be used. Such hardware devices may also be referred to as the "computing device".

The machine learning model building device may consist of a plurality of computer 800, which may be the virtual computer 800, not limited to the physical computer 800. The computer 800 may be computing and storage resources provided by the cloud, and the cloud may provide the functions provided by the machine learning model building device.

### <Effect>

As explained above, the machine learning model building device according to the first embodiment of the present invention can create machine learning models with high generalization performance even when there is little teaching data used to build the machine learning model.

### <<Second embodiment>>

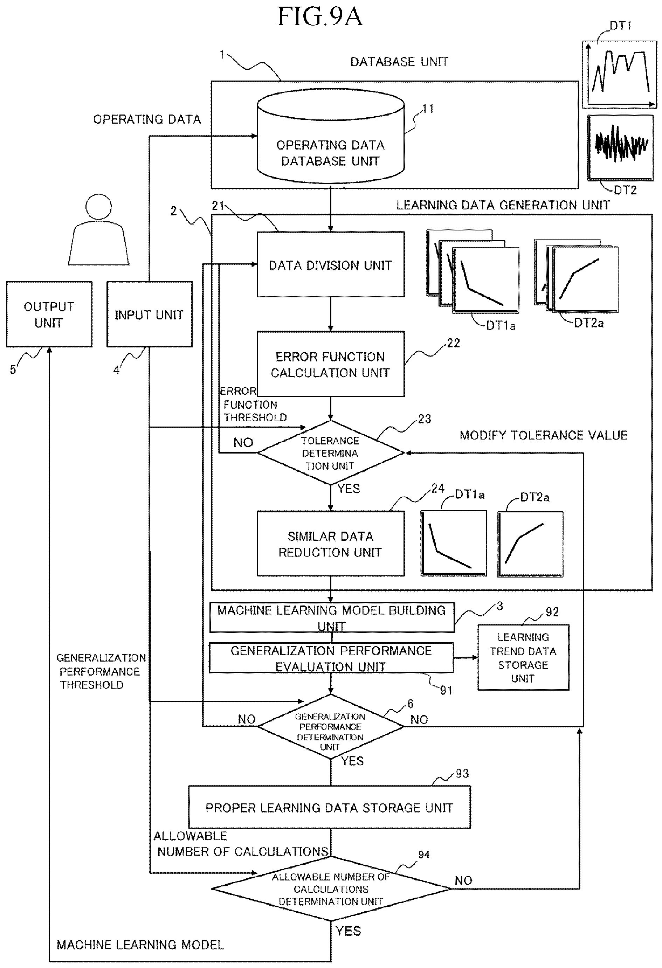

The machine learning model building device according to the second embodiment the present invention is described. Fig.9A shows an example configuration and operation of the machine learning model building device according to the second embodiment. As shown in Fig.9A, the machine learning model building device includes a generalization performance evaluation unit 91, a learning trend data storage unit 92, a proper learning data storage unit 93, and an allowable calculation count determination unit 94. The other parts are the same as the machine learning model building device shown in Fig. 1. It should be noted that the generalization performance evaluation unit 91, the learning trend data storage unit 92, and the allowable calculation count determination unit 94 in Fig. 9A are composed of the programs stored in ROM 802 and/or memory device 804 in Fig. 8. The proper learning data storage unit 93 corresponds to the storage device 804 of Fig. 8.

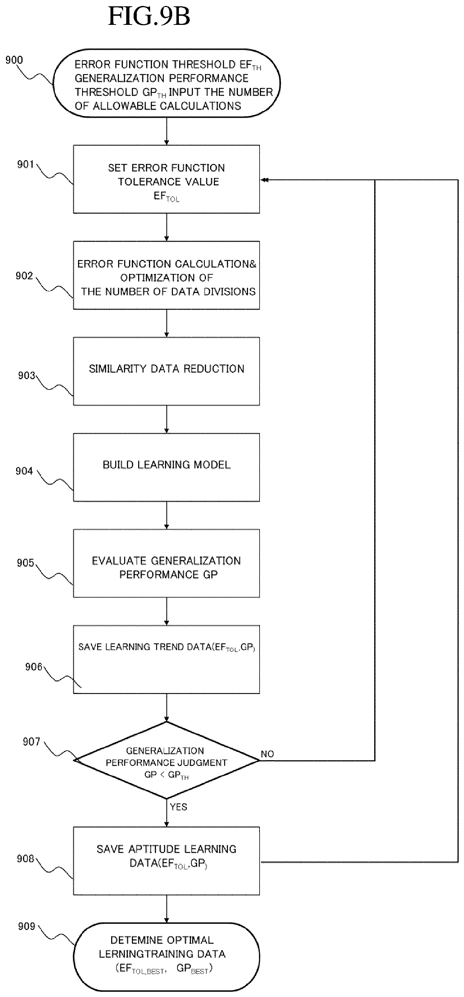

Fig. 9B is a flowchart to illustrate the operation of machine learning model building according to the second embodiment.

Step 900: The user inputs the error function threshold efth to the tolerance value determination unit 23 via input unit 4, inputs the generalization performance threshold gpth to the generalization performance determination unit 6, and inputs the number of acceptable calculations to the allowable calculation count determination unit 94.

Step 901: The tolerance value determination unit 23 sets the error function tolerance eftol based on the error function threshold efth. For example, initially, the tolerance value determination unit 23 sets the error function tolerance value eftol to half of the error function threshold value efth.

Step 902: The data division unit 21 creates a teaching data set based on the actual operation data obtained from the operating data database unit 11, divides each teaching data in the teaching data set, calculates the value of the error function by the error function calculation unit 22, and determines by the tolerance value determination unit 23 whether the value of the error function determine satisfies the error function tolerance eftol. The data division unit 21 repeats data division of the teaching data set until the value of the error function satisfies the error function tolerance eftol. When the tolerance value determination unit 23 determines that the value of the error function satisfies the error function tolerance eftol, it outputs the divided teaching data set that satisfies the error function tolerance eftol to the similar data reduction unit 24.

Step 903: The similar data reduction unit 24 sorts a plurality of pieces of teaching data in the teaching data set into groups of similar teaching data using the method described in the first embodiment, and performs teaching data reduction from each of the groups of similar teaching data.

Step 904: The machine learning model building unit 3 creates/builds a machine learning model using the teaching data set after data reduction.

Step 905: The generalization performance evaluation unit 91 evaluates the generalization performance gp of the machine learning model.

Step 906: The generalization performance evaluation unit 91 associates the error function tolerance eftol with the generalization performance gp and stores them as learning trend data (ftol,gp) in the learning trend data storage unit 92.

Step 907: The generalization performance determination unit 6 determines whether the generalization performance gp of the created machine learning model meets the criteria by comparing the generalization performance gp of the evaluation results with the generalization performance threshold gpth. When the generalization performance of the machine learning model does not meet the criteria, the tolerance value determination unit 23 returns to step 901, modifies the error function tolerance eftol, and sets the modified error function tolerance eftol (step 901). The error function tolerance eftol is modified as follows, for example. Based on the learning trend data (ftol,gp) stored in the learning trend data storage unit 92, the tolerance value determination unit 23 determines which the generalization performance is more likely to improve if the error function tolerance eftol is decreased or if the error function tolerance eftol is increased. The tolerance value determination unit 23 modifies the error function tolerance eftol according to the modification method determined. For example, if the tolerance value determination unit 23 decides to decrease the error function tolerance eftol, it modifies the error function tolerance eftol to decrease by a predetermined amount. For example, if the tolerance value determination unit 23 decides to increase the error function tolerance eftol, it modifies the error function tolerance eftol to increase by a predetermined amount.

When the generalization performance gp of the machine learning model meets the criteria, the generalization performance determination unit 6 proceeds to step 908.

Step 908: The proper learning data storage unit 93 associates the teaching data set (referred to as "proper learning data") used to create the machine learning model whose generalization performance gp meets the criteria with the learning trend data (ftol,gp) and stores the proper learning data associated with the learning trend data (ftol,gp) in the learning trend data storage unit 92. The allowable calculation count determination unit 94 94 determines whether the number of judgments determined "YES" in the generalization performance judgment of step 907 is greater than or equal to the allowable number of calculations. When the number of judgments is less than the allowable number of calculations, the allowable calculation count determination unit 94 returns to step 901, modifies the error function tolerance value eftol, and sets the modified error function tolerance value eftol (step 901). Thereafter, steps 902 through 907 are performed again.

When the number of judgments is greater than or equal to the allowable number of calculations, the allowable calculation count determination unit 94 proceeds to step 909, determines the appropriate teaching data with the best generalization performance gp from the appropriate teaching data stored in the learning trend data storage unit 92 as the optimal teaching data (optimal teaching data set), and outputs the machine learning model created using the determined optimal teaching data (optimal teaching data set) to the output unit 5.

### <Effect>

As explained above, the machine learning model building device according to the second embodiment of the present invention can create machine learning models with higher generalization performance even when there is little teaching data by automatically searching for appropriate data partitioning.

### <<Third embodiment>>

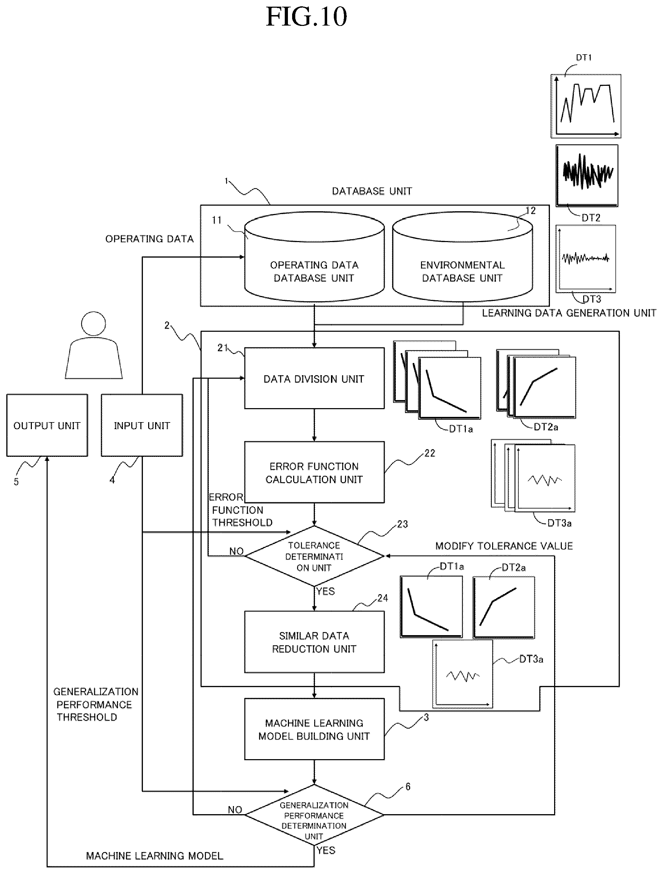

The machine learning model building device according to the third embodiment of the present invention is described. Fig.10 is a diagram illustrating an example configuration of the machine learning model building device according to the third embodiment. As shown in Fig.10, the database unit 1 of the machine learning model building device includes the environmental database unit 12 in which the environmental data DT3 is stored. Others are the same as the machine learning model building device for the first embodiment shown in Fig. 1.

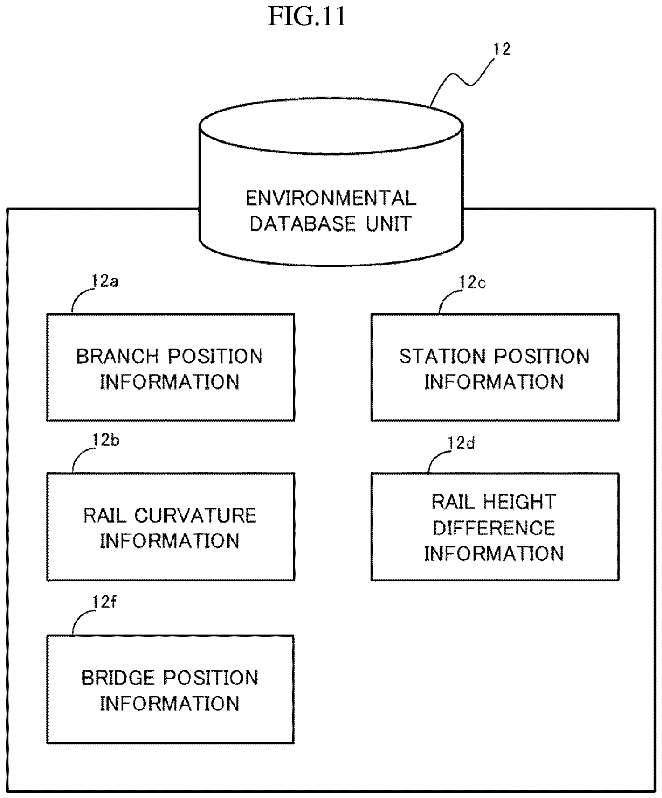

Fig. 11 illustrates the environmental database unit 12. As shown in Fig. 11, the environmental database unit 12 stores the following information: branch position information 12a, track curvature information 12b, station position information 12c, track height difference information 12d, and bridge position information 12f. It should be noted that the information stored in the environmental database is not limited to the above 12a through 12f as long as the environmental information is correlated with the characteristics.

The branch position information 12a contains data that measures the branch position relative to the distance traveled by the rail vehicle over a certain travel section (sometimes referred to as "distance-branch position data"). The distance-branch position data may be expressed as "0" and "1" to indicate the presence or absence of a branch position relative to the travel distance.

The rail curvature information 12b contains data that measures the rail curvature relative to the distance traveled by the rail vehicle over a certain travel section (sometimes referred to as "distance-rail curvature data").

Station position information 12c contains data that measures the station position relative to the distance traveled when the rail vehicle travels a certain travel section (sometimes referred to as "distance-station position data"). It should be noted that the distance-station position data may be expressed as "0" and "1" for the presence or absence of a station position relative to the travel distance (presence or absence of a station).

The rail height difference information 12d contains data that measures the rail height difference relative to the distance traveled by a rail vehicle over a certain travel section (sometimes referred to as "distance-rail height difference data"). The bridge position information 12f contains data that measures the bridge position relative to the distance traveled by the rail vehicle over a certain travel section (sometimes referred to as "distance-bridge position data"). The distance-bridge position data may be expressed as "0" and "1" for the presence or absence of a branch position relative to the travel distance.

In the machine learning model building device according to the third embodiment, a set of distance-speed data DT1, distance-load data DT2, and environmental data DT3 (distance-branch position data, distance-track curvature data, distance-station position data, and distance-track height difference data) collected when the rail vehicle travels a certain travel section is used as teaching data. The teaching data set containing a plurality of pieces of teaching data is used by the machine learning model building unit 3 to generate a machine learning model. An example of a machine learning model is a machine learning model using a neural network that takes the distance-speed data and environmental data as inputs and outputs a load frequency distribution necessary for evaluating the degree of damage to rail vehicle.

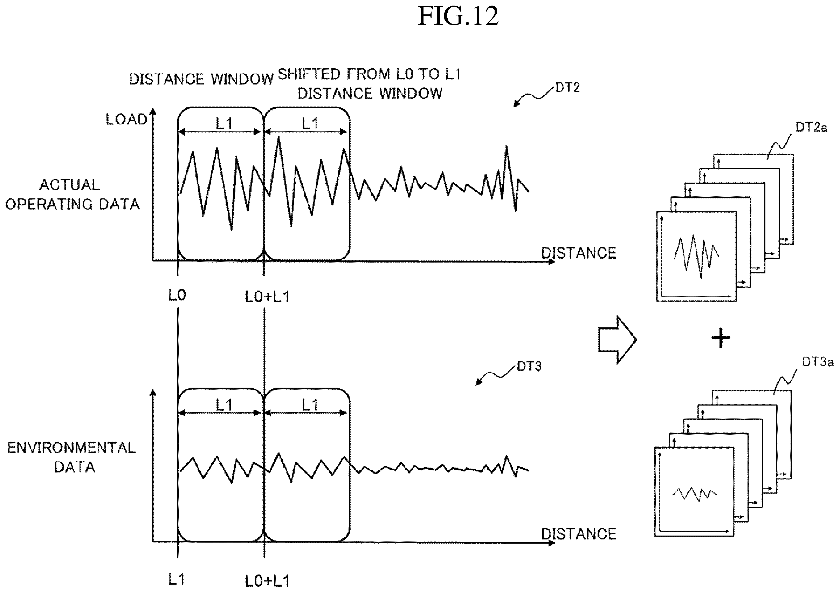

The data division unit 21 obtains the teaching data set from the operating data database unit 11 and divides each teaching data contained in the teaching data set. As shown in Fig. 12, the data division unit 21 divides the distance-load data DT2 into data DT2a for each predetermined distance window L1, and the data division unit 21 divides the environmental data DT3 (in this example, distance-branch position data DT3 (in this example, distance-branch position data, distance - track curvature data, distance - station position data, distance-track height difference data, and bridge position data) also into DT3a for each specified distance window L1, as shown in Fig. 12. The data division unit 21 divides the distance-speed data DT1 into DT1a data for each predetermined distance window L1, as shown in Fig. 4B, to divide the teaching data.

As in the first embodiment, the error function calculation unit 22 uses the error function expressed in Equation (1) in Fig. 5 in order to evaluate the error of the teaching data set containing a plurality of pieces of post-division teaching data to calculate a value of the error function.

The tolerance value determination unit 23 obtains the value of the error function from the error function calculation unit 22 and determines whether the value of the error function is smaller than the error function threshold (tolerance value). When the value of the error function is greater than or equal to the error function threshold (tolerance value), the tolerance value determination unit 23 outputs the pre-division teaching data set to the data division unit 21. In order to reduce the value of the error function, the data division unit 21 divides the teaching data contained in the pre-division teaching data set again with a distance window Lnew (larger or smaller than the previous distance window) of a different size from the previous distance window (L1 for the first time). That is, the data division unit 21 divides the teaching data by a number of data divisions different from the previous data division number.

The data division unit 21 outputs the teaching data set including a plurality of pieces of post-division teaching data after division to the error function calculation unit 22. Error function calculation unit 22 calculates the value of the error function for the post-division teaching data set divided by a new distance window Lnew. The tolerance value determination unit 23 again determines whether the value of the error function of the teaching data set is smaller than the error function threshold (tolerance value).

When the value of the error function is smaller than the error function threshold (tolerance value), the error in the characteristic quantity of the post-division teaching data set relative to the pre-division teaching data set is within the tolerance range. Therefore, in this case, the tolerance value determination unit 23 outputs the post-division teaching data set to the similar data reduction unit 24.

When the similar data reduction unit 24 obtains the post-division teaching data set, it reduces some of the teaching data from the post-division teaching data set so that there are fewer similar teaching data.

When the machine learning model building unit 3 obtains the teaching data set after reducing similar data, it creates a machine learning model using the teaching data set. The machine learning model building unit 3 outputs the machine learning model to the generalization performance determination unit 6.

The generalization performance determination unit 6 evaluates (judges) the generalization performance of the machine learning model. For example, the generalization performance determination unit 6 determines whether the generalization performance of the machine learning model meets the specified criteria using a test data set. When it is determined that the generalization performance of the machine learning model meets the predetermined criteria, the generalization performance determination unit 6 outputs the machine learning model to the output unit 5.

When it is determined that the generalization performance of the machine learning model does not meet the specified criteria, the generalization performance determination unit 6 modifies, so that the generalization performance improves, the error function threshold (tolerance value) to a different error function threshold (tolerance value) from the previously set error function threshold (tolerance value), sets the error function threshold (tolerance value) to the modified error function threshold (tolerance value), obtains the pre-division teaching data set, inputs the pre-division teaching data set to the data division unit 21, and regenerates the machine learning model.

### <Effect>

As explained above, the machine learning model building device according to the third embodiment can create, even when there is little teaching data, machine learning models with higher generalization performance by using environmental information that is correlated with the output (load) to predict the load.

### <<Modification example>>

The present invention is not limited to the above embodiments, and various variations can be adopted within the scope of the present invention. Furthermore, the above each embodiment can be combined with each other as long as they do not depart from the scope of the present invention.

In each of the above embodiments, the machine learning model building device may be configured to omit the similar data reduction unit 24.

In each of the above embodiments, the data used as teaching data may be time series data, and a time window may be used instead of a distance window. In each of the above embodiments, examples of machine learning models to be created include a machine learning model using a neural network that outputs a load frequency distribution of rail vehicle with distance-speed data as input, but the machine learning models to be created are not limited to these examples. For example, a machine learning model that predicts the characteristics of actual operation data of equipment other than the rail vehicle may be used. A teaching data set (teaching data) is used according to the machine learning model to be created. The data used as the teaching data may be data acquired by acceleration sensors, sound sensors, etc., time series data of loads, data after Fourier transforming time series data of loads, etc.

In each of the above embodiments, data after data processing such as down sampling may be used as teaching data. Considering actual operation, it is possible that speed data at a high sampling rate, such as in running tests, cannot always be obtained. For example, a case can be assumed in which the available operation information is coarse data such as run curves. In this case, when training a machine learning model (neural network) (i.e., when creating a machine learning model), the time-series data of speed (distance-speed data) from the driving test data is not directly used, but rather the time-series data of speed (distance-speed data) that is made equivalent to run curve by down sampling from the driving test data is used. This is because it is more desirable to use the time-series data (distance-speed data) of speeds that are equivalent to the run curve by down-sampling the running test data.

### Reference Signs List

- 1:: database unit
- 2:: learning data generation unit
- 3:: machine learning model building unit
- 4:: input unit
- 5:: output unit
- 6:: generalization performance determination unit
- 11:: operating data database unit
- 12:: environmental database unit
- 21:: data division unit
- 22:: error function calculation unit
- 23:: tolerance value determination unit
- 24:: similarity data reduction unit

## Claims

1. A machine learning model building device comprising an information processing device (800) that builds a machine learning model for predicting a characteristic of actual operation data (DT1, DT2) of equipment,
wherein,
the information processing device (800) comprises an actual operation database (11) that holds the actual operation data (DT1, DT2); and
the information processing device (800) is configured to:
obtain the actual operation data (DT1, DT2) from the actual operation database (11);
create a teaching data set including one or more pieces of teaching data (DT1, DT2) based on the actual operation data (DT1, DT2);
create a post-division teaching data set containing a plurality of pieces of post-division teaching data (DT1a, DT2a) by dividing the teaching data (DT1, DT2) contained in the teaching data set so that an error between a characteristic quantity of the teaching data (DT1, DT2) before division and the sum of characteristic quantities of the plurality of pieces of teaching data (DT1a, DT2a) after division becomes less than or equal to a tolerance value; and
create the machine learning model using the post-division teaching data set.

2. The machine learning model building device according to claim 1,
wherein,
the information processing device (800) is configured to:
evaluate generalization performance of the created machine learning model;
modify the tolerance value when the generalization performance of the machine learning model does not meet predetermined standard performance;
create a post-division teaching data set containing a plurality of pieces of post-division teaching data (DT1a, DT2a) again by dividing the pre-division teaching data (DT1, DT2) so that the error between the characteristic quantity of the pre-division teaching data (DT1, DT2) and the sum of the characteristic quantities of the plurality of pieces of post-division teaching data (DT1a, DT2a) becomes less than or equal to the modified tolerance value; and
recreate the machine learning model using the post-division teaching data set that has been created anew.

3. The machine learning model building device according to claim 1,
wherein
the information processing device (800) is configured to:
sort, after creating the post-division teaching data set and before creating the machine learning model, the plurality of pieces of teaching data (DT1a, DT2a) contained in the post-division teaching data set into a plurality of similar teaching data groups (24c, 24d, 24e) comprising the plurality of pieces of teaching data (DT1a, DT2a) that are similar to each other; and
reduce a portion from the plurality of pieces of teaching data (DT1a, DT2a) included in the post-division teaching data set based on the number of the teaching data (DT1a, DT2a) included in each of the similar teaching data groups (24c, 24d, 24e), thereby improving diversity of the plurality of the teaching data (DT1a, DT2a) included in the post-division teaching data set.

4. The machine learning model building device according to claim 3,
wherein
the information processing device (800) is configured to reduce a portion of the plurality of teaching data (DT1a, DT2a) contained in the post-division teaching data set so as to average the number of the teaching data (DT1a, DT2a) contained in each of the plurality of similar teaching data groups (24c, 24d, 24e).

5. The machine learning model building device according to claim 1,
wherein
the information processing device (800) is configured to:
perform, after dividing the teaching data (DT1, DT2), a first determination that determines whether the error between the characteristic quantity of the teaching data (DT1, DT2) before division and the sum of the characteristic quantities of the plurality of pieces of teaching data (DT1a, DT2a) after division is less than or equal to the tolerance value;
perform a process that changes, when the error is greater than the tolerance value in the first determination, the number of divisions of the teaching data (DT1, DT2) from the previous number of divisions of the teaching data (DT1, DT2) to the different number of divisions;
perform, after dividing the teaching data (DT1, DT2) by the changed number of divisions of the teaching data, a second determination that determines whether the error between the characteristic quantity of the teaching data (DT1, DT2) before division and the sum of the characteristic quantities of the plurality of pieces of the teaching data (DT1a, DT2a) after division is less than or equal to the tolerance value; and
create the post-division teaching data set by repeating the process and the second determination until the error is less than or equal to the tolerance value in the second determination.

6. The machine learning model building device according to claim 1,
wherein
the information processing device (800) is configured to:
evaluate the generalization performance of the created machine learning model;
modify the tolerance value when the generalization performance of the machine learning model does not meet the specified standard performance;
divide the teaching data (DT1, DT2) so that the error between the characteristic quantity of the teaching data (DT1, DT2) before division and the sum of the characteristic quantities of the plurality of pieces of post-division teaching data (DT1a, DT2a) becomes less than or equal to the modified tolerance value, thereby recreating the post-division teaching data set including the plurality of pieces of post-division teaching data (DT1a, DT2a); and
repeat the process of recreating the machine learning model using the post-division teaching data set that has been recreated until the generalization performance of the machine learning model meets a predetermined standard performance.

7. The machine learning model building device according to claim 6,
wherein
the information processing device (800) is configured to:
store, each time the machine learning model is created or recreated, the tolerance value and the generalization performance in association with each other; and
modify the tolerance value based on data trends of the stored tolerance values and the generalization performance.

8. The machine learning model building device according to claim 1,
wherein,
the characteristic quantity is a degree of damage.

9. The machine learning model building device according to claim 1,
wherein
the information processing device (800) has an environmental database (12) that holds environmental data including information on environment corresponding to a position where the actual operation data (DT1, DT2) was obtained, and
the information processing device (800) is configured to create the teaching data set containing one or more pieces of the teaching data (DT1, DT2) by pairing the actual operation data (DT1, DT2) obtained from the actual operation database (11) with the environmental data obtained from the environmental database (12).

10. The machine learning model building device according to claim 9,
wherein
the environmental data includes information (12a) on positions of rail branches, information (12c) on station positions, information (12b) on rail curvature, information (12d) on rail elevation differences, and information (12f) on bridge positions.

11. The machine learning model building device according to claim 1,
wherein
the information processing device (800) is configured to:
perform a first evaluation that evaluates generalization performance of the created machine learning model;
in the first evaluation, when the generalization performance of the machine learning model meets predetermined standard performance, modify the tolerance value after storing the created machine learning model and the generalization performance in correspondence with the machine learning model;
modify the tolerance value when the generalization performance of the machine learning model does not meet the predetermined standard performance in the first evaluation;
perform, after modifying the tolerance value, a machine learning model re-creation evaluation process that recreates the post-division teaching data set by dividing the teaching data (DT1, DT2) so that the error between the characteristic quantity of the teaching data (DT1, DT2) before division and the sum of the characteristic quantities of the plurality of pieces of teaching data (DT1a, DT2a) after division becomes less than or equal to the tolerance value, recreates the machine learning model anew using the recreated post-division teaching data set, and evaluates the recreated machine learning model;
perform, when the generalization performance of the recreated machine learning model meets the predetermined standard performance in the second evaluation, the machine learning model re-creation evaluation process again after saving the recreated machine learning model in correspondence with the generalization performance and then modifying the tolerance value;
perform, when the generalization performance of the recreated machine learning model does not meet the predetermined standard performance in the second evaluation, the machine learning model re-creation evaluation process again after modifying the tolerance value; and
create the machine learning model using the post-division teaching data set with the best generalization performance, which is saved each time the machine learning model is created or recreated when the number of times that the generalization performance is determined to meet the predetermined standard performance in the second evaluation is greater than or equal to a predetermined allowable number of times.

12. A machine learning model building method executed by an information processing device (800), the information processing device (800) building a machine learning model for predicting a characteristic of actual operation data (DT1, DT2) of equipment, the information processing device (800) comprising an actual operation database (11) that holds the actual operation data (DT1, DT2), the machine learning model building method including:
obtaining the actual operation data (DT1, DT2) from the actual operation database (11);
creating a teaching data set including one or more pieces of teaching data (DT1, DT2) based on the actual operation data (DT1, DT2);
creating a post-division teaching data set containing a plurality of pieces of post-division teaching data (DT1a, DT2a) by dividing the teaching data (DT1, DT2) contained in the teaching data set so that an error between a characteristic quantity of the teaching data (DT1, DT2) before division and the sum of characteristic quantities of the plurality of pieces of teaching data (DT1a, DT2a) after division becomes less than or equal to a tolerance value; and
creating the machine learning model using the post-division teaching data set.

13. A program for causing a computer to execute a process for building a machine learning model for predicting a characteristic of actual operation data (DT1, DT2) of equipment, the process including:
obtaining the actual operation data (DT1, DT2) from the actual operation database (11);
creating a teaching data set including one or more pieces of teaching data (DT1, DT2) based on the actual operation data (DT1, DT2);
creating a post-division teaching data set containing a plurality of pieces of post-division teaching data (DT1a, DT2a) by dividing the teaching data (DT1, DT2) contained in the teaching data set so that an error between a characteristic quantity of the teaching data (DT1, DT2) before division and the sum of characteristic quantities of the plurality of pieces of teaching data (DT1a, DT2a) after division becomes less than or equal to a tolerance value; and
creating the machine learning model using the post-division teaching data set.
